# EUROPEAN PATENT SPECIFICATION

(11) **EP 2 485 982 B1**
(45) Date of publication and mention of the grant of the patent: **21.01.2015**
(21) Application number: 10782374.2
(22) Date of filing: 06.10.2010
(51) Int. Cl.: C02F 1/04, C02F 101/32, C02F 9/00, C02F 103/36

(54) **PROCESS FOR THE PURIFICATION OF AN AQUEOUS STREAM COMING FROM THE FISCHER TROPSCH REACTION**
VERFAHREN ZUR REINIGUNG EINES WÄSSRIGEN STROMS AUS EINER FISCHER-TROPSCH-REAKTION
PROCÉDÉ DE PURIFICATION D'UN COURANT AQUEUX PROVENANT DE LA RÉACTION DE FISCHER-TROPSCH

(30) Priority: 08.10.2009 IT MI20091718
(43) Date of publication of application: 15.08.2012
(73) Proprietor: ENI S.p.A., 00144 Roma (IT)
(72) Inventor: CARNELLI, Lino, I-22070 Carbonate (CO) (IT); LOCATELLI, Lino, ** (IT)
(74) Representative: Bottero, Carlo
(86) International application number: PCT/IB2010/002563
(87) International publication number: WO 2011/042806

(56) References cited:
- WO-A1-2005/113426
- WO-A2-2006/039475
- US-A1- 2002 177 629
- US-B1- 6 225 358
- US-B1- 6 262 131

## Description

The present invention relates to a process for the purification of an aqueous stream coming from the Fischer-Tropsch reaction.

More specifically, the present invention relates to a process for the purification of an aqueous stream coming from the Fischer-Tropsch reaction which comprises feeding a part of said aqueous stream to a saturator, feeding a part of said aqueous stream to a distillation and/or stripping column, feeding the aqueous stream leaving the head of said distillation and/or stripping column to a saturator.

The Fischer-Tropsch technology for preparing hydrocarbons from mixtures of gases based on hydrogen and carbon monoxide, conventionally known as synthesis gas, is known in scientific literature. A compendium which summarizes the main works on the Fischer-Tropsch reaction is contained in the Bureau of Mines Bulletin, 544 (1955) entitled "Bibliography of the Fischer-Tropsch Synthesis and Related Processes" H.C. Anderson, J.L. Wiley and A. Newell.

The Fischer-Tropsch technology is generally based on the use of slurry reactors, which are used in chemical reactions that are carried out in multiphase systems in which a gaseous phase is bubbled into a suspension of a solid (solid phase) in a liquid (liquid phase). In the case of Fischer-Tropsch reaction, the gaseous phase comprises synthesis gas or "syngas", which is a combination of hydrogen (H₂) and carbon monoxide (CO), with a molar ratio H₂/CO ranging from 1 to 3, preferably of about 2, the liquid phase, at the reaction temperature, prevalently comprises the reaction product, i.e. essentially linear hydrocarbons with a high number of carbon atoms, and the solid phase prevalently comprises the catalyst. The synthesis gas can optionally contain lower amounts of carbon dioxide (CO₂) and/or water. The presence of sulfur, nitrogen, halogens, selenium, phosphorous and arsenic, or their derivatives, in said synthesis gas, is not desirable. For this reason, and depending on the quality of the synthesis gas, it is preferable to remove the sulfur and other contaminants, before feeding said synthesis gas to the Fischer-Tropsch reactor. Methods for removing these contaminants are known in the art. The use of protection beds known as "guard beds" based on zinc oxide are preferred for the removal of sulfur or its derivatives. Furthermore, it is generally preferable to remove the carbon dioxide (CO₂) which is optionally formed from the synthesis gas, as also the sulfur or its derivatives not yet removed. For this purpose, for example, it can operate by placing the synthesis gas in contact with a moderately alkaline solution (e.g., a solution of potassium carbonate) in a packed column.

The synthesis gas preferably comes from the steam reforming and/or from the partial oxidation of natural gas, typically methane, or of other heavier hydrocarbons optionally present in natural gas (e.g., ethane, propane, butane), according to processes known in the art.

In a steam reforming process, the desulfurized natural gas is generally mixed with steam and is passed, operating at a high temperature and pressure, through a catalytic bed comprising a catalyst containing a transition metal, preferably nickel. The steam is usually supplied by means of a saturator in which water is put in contact with the above preheated natural gas.

Alternatively, the synthesis gas can derive from other production processes such as, for example, the autothermal reforming process or the process known as C.P.O. (Catalytic Partial Oxidation) which use streams of high-purity oxygen or enriched air together with the desulfurized natural gas and the catalyst, or from the gasification of coal or other carbonaceous products, with steam at a high temperature as described, for example, in "Catalysis Science and Technology", Vol. 1, Springer-Verlag, New York, 1981.

In the Fischer-Tropsch reaction, the carbon monoxide and the hydrogen are converted to water and organic molecules mainly containing carbon and hydrogen (i.e. hydrocarbons). Furthermore, other organic molecules which contain oxygen in addition to carbon and hydrogen, called oxygenated compounds, can be formed during the Fischer-Tropsch reaction.

The Fischer-Tropsch reaction is normally carried out at temperatures equal to or higher than 150°C, for example ranging from 180°C to 350°C, maintaining a pressure ranging from 0.5 MPa to 10 MPa, preferably ranging from 1 MPa to 5 MPa, inside the reactor.

As mentioned above, the Fischer-Tropsch reaction is facilitated by a catalyst. The catalysts preferably have the function of increasing the reaction rate without being used up during the reaction itself. The type of catalyst influences the relative amounts of hydrocarbons obtained from the Fischer-Tropsch reaction. The catalysts normally used in the Fischer-Tropsch reaction generally contain at least one metal belonging to groups 8, 9, or 10 of the Periodic Table of Elements (in the IUPAC notation dated June 22, 2007).

Catalysts containing cobalt, iron, ruthenium, and/or nickel, can be advantageously used for the conversion of synthesis gas to hydrocarbons suitable for the production of gasoline and/or diesel. Cobalt, for example, is particularly suitable for Fischer-Tropsch catalysts for the production of heavy hydrocarbons from synthesis gas. Iron has the advantage of being easily available and relatively economical but has the disadvantage of increasing the reaction known as "water-gas-shift", which converts a part of the carbon monoxide and water produced into carbon dioxide and hydrogen. Nickel favours the termination reaction and is advantageously used for the selective production of methane from synthesis gas. Ruthenium has the advantage of a high activity but is rather costly.

The Fischer-Tropsch reaction typically produces a mixture of gaseous hydrocarbons, liquid hydrocarbons, and waxes, having a number of carbon atoms varying from 1 to 100 or more, and having different molecular weights. Depending on the molecular weights distribution, said mixtures are suitable for different uses. Mixtures containing liquid hydrocarbons, for example, can be subjected to further treatments in order to obtain gasoline, as well as medium distillates. The waxes can be subjected to a further treatment in order to be converted to liquid and/or gaseous hydrocarbons. Consequently, in order to use Fischer-Tropsch reaction for the subsequent production of fuel, it is desirable to increase the production of liquid hydrocarbons and/or waxes, such as hydrocarbons having at least 5 carbon atoms per molecule (C₅₊ hydrocarbons).

In addition to mixtures of hydrocarbons, the Fischer-Tropsch reaction also generates water according to the following equation:

n CO + 2n H₂ → CₙH₂ₙ + n H₂O.

The production of water is quite significant as a mole of water is produced for each mole of carbon monoxide converted to hydrocarbons. Typically, when non-shifting catalysts are used, for example, cobalt and/or ruthenium, the reaction known as "water-gas-shift" is minimum so that the total production of water is close to that of the stoichiometric reaction. For shifting catalysts, for example, iron, the reaction known as "water-gas-shift" is more significant so that the total production of water is always considerable but lower than that of the stoichiometric reaction.

Before purification, the water coming from the Fischer-Tropsch reaction is generally subjected to preliminary separations. Typically it passes through a three-phase separator from which an organic condensate is obtained, together with a vapour phase and an aqueous phase, which still contains organic compounds dissolved and in suspension, and is preferably treated in a coalescence filter.

The water thus separated remains contaminated by hydrocarbon compounds, typically less than 1,000 ppm, and oxygenated compounds, soluble in water. The amount of contaminants depends on the catalyst and on the reaction conditions, in particular temperature and pressure. With an increase in the reaction temperature, the overall aamount of oxygenated compounds increases the group of organic acids more significantly.

The main oxygenated contaminants are light alcohols such as methanol and ethanol, indicatively present in an amount of from 0.5% by weight to 5% by weight. Heavier alcohols (for example, propanol, butanol, pentanol, etc.) and other oxygenated compounds, such as aldehydes (for example, acetaldehyde, propionaldehyde, butyraldehyde, etc.), ketones (acetone, methylpropylketone, etc.) and acids (for example, formic acid, acetic acid, propionic acid, butyric acid, isobutyric acid, valeric acid, hexanoic acid, heptanoic acid, octanoic acid, etc.), are also present in lower amounts, the latter indicatively present in concentrations lower than 1.5% by weight. The amount of compounds present, within each group, decreases with an increase in the molecular weight, and compounds with up to 25 carbon atoms are included. The water can also contain small amounts of nitrogenated and sulfurated compounds deriving from the feedstock used, in addition to traces of metals which come from the reactor. The metals can also be present in the form of suspended solids.

The water coming from the Fischer-Tropsch reaction consequently does not have a commercial value and cannot be disposed of as such due to the organic compounds present in it which can create various drawbacks. Organic oxygenated compounds (in particular acids), for example, convey corrosive properties, hydrocarbons the tendency to form foams (foaming).

Furthermore, rainwater or other service water present in the production site can be added to the water coming from the Fischer-Tropsch reaction.

A treatment plant of the water coming from the Fischer-Tropsch reaction is therefore necessary for both the re-use of the same within the Fischer-Tropsch process (for example, as process water or as cooling water in the reaction section), and also for its disposal outside, or for other further uses (for example, as water for irrigation, or drinking water).

The treatment or combination of water treatment coming from the Fischer-Tropsch reaction is determined by the restrictions imposed by its final use and by the organic compounds present therein.

The treatment plant of water coming from the Fischer-Tropsch reaction, for example, can be of the biological type, which can be preceded by a treatment, typically distillation and/or stripping, to remove the most volatile organic compounds. The water deriving from the biological treatment is then generally subjected to a further finishing treatment to remove the solids and, if necessary, also the residual salts from the biological treatment. An approach of this type is described for example in the American patents US 7,166,219, US 7,150,831, or in international patent application WO 2005/113426.

Alternatively, the water coming from the Fischer-Tropsch reaction can be subjected to a treatment of the physico-chemical type. The American patent US 6,462,097, for example, describes a process in which the stripping treatment is followed by an adsorption step on activated carbons. The aqueous stream coming from said absorption step on activated carbons, rich in organic compounds, can be subsequently sent to the reaction reactor. Similar suggestions are also provided for example in American patents US 6,225,358, US 5,053,581, US 5,004,862, in which the organic compounds, for example C₁ to C₆ alcohols, present in the water coming from the Fischer-Tropsch reaction, are potentially brought back and then upgraded to simple molecules such as COₓ/H₂ (synthesis gas).

Other types of treatment, of the physico-chemical type, allow one or more aqueous streams enriched in organic compounds to be separated.

The American patent application US 2004/0262199, for example, describes the possibility of separating, by distillation, a prevalently alcohol stream with a content of non-acid compounds (NAC) ranging from 55% by weight to a maximum of 85% by weight. This stream can be used as fuel or, alternatively, it can be further processed to recover valuable products.

The formation, by treatment of the physico-chemical type, of one or more streams enriched in various groups of organic compounds, contemporaneously with the production of water purified to the required degree, is described for example in US 7,153,432 which proposes a process with at least two steps, the first a distillation step and the second a separation step with membranes, and optionally, if necessary, other accessory steps for bringing the purified water to the required degree of purity

US 7,153,432, in particular, describes a purification process of the water co-produced in the Fischer-Tropsch reaction which comprises: (a) subjecting the water co-produced in the Fischer-Tropsch reaction to distillation or liquid-liquid extraction in order to remove at least a part of the alcohols present in said water and to produce a first stream enriched in water; and (b) subjecting said first stream enriched in water to a separation process with membranes which allows at least some of the solids in suspension to be removed together with some organic acids in order to obtain purified water. Said separation process with membranes can be selected from the group comprising: micro-filtration, ultra-filtration, reverse osmosis, pervaporation.

Further uses of the water coming from the Fischer-Tropsch reaction are known in the art.

International patent application WO 2005/113426, for example, describes a method for the use of the water coming from the Fischer-Tropsch reaction carried out at a low temperature (LTFT), which includes the phase of feeding the water coming from said reaction to a saturator contained in the production unit of synthesis gas in order to saturate the stream of gaseous hydrocarbons fed to said unit.

American patent US 7,323,497 describes a process for the synthesis of hydrocarbons comprising: (a) subjecting a mixture of hydrocarbons and steam to a catalytic steam reforming process in order to obtain a partially reformed gas; (b) subjecting the partially reformed gas to a partial oxidation with a gas containing oxygen and bringing the resulting gas towards equilibrium by means of a steam reforming catalyst in order to obtain a mixture of reformed synthesis gas; (c) cooling the mixture of reformed synthesis gas to below the dew point of the steam in order to condense the water and to separate the condensed water in order to obtain a water-free synthesis gas; (d) synthesizing the hydrocarbons from said water-free synthesis gas by means of the Fischer-Tropsch reaction; and (e) separating the hydrocarbons from the water co-produced; characterized in that at least a part of said co-produced water is fed to a saturator in which it comes into contact with a feedstock of hydrocarbons thus providing a mixture of hydrocarbons and steam to be subjected to a catalytic steam reforming.

American patent US 5,004,862 describes a process for the purification of a condensed stream deriving from the synthesis of hydrocarbons or from the synthesis of alcohols comprising: (a) putting the condensed stream in contact with a hot gaseous mixture comprising methane and steam in order to remove (to strip) the contaminants from the condensate, said contaminants comprising low-molecular-weight hydrocarbons and oxygenated compounds; (b) recovering a gaseous stream comprising the contaminants and the gaseous mixture; (c) recovering the purified water separately. The above step (a) is preferably carried out in a perforated plate tower, but can be equally carried out in a packed tower or in any device which allows a countercurrent vapour/liquid separation.

American patent US 6,225,358 describes a method for the production of heavy hydrocarbons comprising the following steps: reacting a gas containing oxygen and a light hydrocarbon to produce a synthesis gas; sending the synthesis gas to a Fischer-Tropsch reactor; converting the synthesis gas into an effluent containing heavy hydrocarbons; removing the contaminants from the wastewater stream; wherein the step for removing the contaminants from the wastewater stream comprises the steps of: concentrating the contaminants in a concentrator column in order to obtain an effluent concentrated in contaminants; condensing the effluent concentrated in contaminants in order to obtain a condensed concentrated stream; accumulating the condensed concentrated stream in a reflux drum; using a stripping gas in a stripping column to remove the contaminants from at least a part of the condensed concentrated stream in order to obtain a treated aqueous stream and a stream containing the contaminants and the stripping gas.

American patent application US 2008/0119574 describes a method for the recovery of organic compounds from wastewater comprising: feeding a gaseous stream to a saturator; mixing a makeup water stream including recoverable organic compounds, with a recycled aqueous stream; heating the mixed makeup water stream; feeding the makeup water stream to the saturator; generating a saturated gaseous stream including the feeding gas, steam and the organic compounds recovered from the makeup water stream; generating the recycled aqueous stream; bypassing a part of the gaseous stream fed from the saturator to increase the operating temperature of the saturator and to increase the recovery of the organic compounds recovered from the makeup water stream; and mixing the bypassed portion of the gaseous stream fed with the saturated gaseous stream.

The Applicant has observed however that the feeding of the water coming from the Fischer-Tropsch reaction directly to a saturator can cause various problems. The organic compounds present in said water, for example, in addition to the problems mentioned above (i.e. problems of corrosion of the plant and/or foaming), can cause, in particular the acids, a poisoning of the catalysts used in the steam reforming process.

The Applicant has considered the problem of finding a process which allows at least a part of the aqueous stream coming from the Fischer-Tropsch reaction to be used as process water in the synthesis gas production plant subsequently sent to the Fischer-Tropsch plant for the production of hydrocarbons.

It has now been found that by subjecting the aqueous stream deriving from the Fischer-Tropsch reaction to a purification process which comprises feeding a part of said aqueous stream to a saturator, feeding a part of said aqueous stream to a distillation and/or stripping column, feeding the aqueous stream leaving the head of said distillation and/or stripping column to said saturator, it is possible to overcome the drawbacks described above and to use at least a part of said aqueous stream in the synthesis gas production plant subsequently sent to the Fischer-Tropsch plant for the production of hydrocarbons. In particular, said aqueous stream can be used in the production of synthesis gas as vapour source and, thanks to the presence of oxygenated organic compounds, in particular alcohols, as hydrogen and carbon source, thus increasing the production of said synthesis gas.

This process therefore allows the amount of acids sent to the saturator to be reduced, thus avoiding both problems of corrosion of the plant due to the presence of said organic acids, and the poisoning of the catalysts normally used in the production of synthesis gas.

According to a first aspect, the present invention therefore relates to a process for the purification of an aqueous stream (i) coming from a Fischer-Tropsch reaction which comprises:
- feeding an amount lower than or equal to 50% by weight, preferably ranging from 25% by weight to 45% by weight, with respect to the total weight of said aqueous stream (i), to a saturator [aqueous stream (ia)];
- feeding an amount higher than or equal to 50% by weight, preferably ranging from 55% by weight to 75% by weight, with respect to the total weight of said aqueous stream (i), to a distillation column [aqueous stream (ib)] obtaining two outgoing streams:
   - an aqueous stream (ii) leaving the head of the column comprising alcohols having from 1 to 20 carbon atoms, preferably from 1 to 8 carbon atoms, organic acids having from 1 to 8 carbon atoms, preferably from 2 to 4 carbon atoms, said organic acids being present at a concentration lower than or equal to 2% by weight, preferably ranging from 0.01% by weight to 1.5% by weight, with respect to the total weight of said aqueous stream (ii), and other optional volatile compounds;
   - an aqueous stream (iii) leaving the bottom of the distillation column comprising organic acids having from 1 to 8 carbon atoms, preferably from 2 to 4 carbon atoms;
- feeding said aqueous stream (ii) to said saturator;
- feeding the process gas to said saturator obtaining a gaseous stream (iv) leaving the head of the saturator;
- feeding said gaseous stream (iv) to the synthesis gas production plant.

According to a preferred embodiment of the present invention, said gaseous stream (iv) is fed to the catalytic steam reforming.

For the purposes of the present description and of the following claims, the definitions of the numeric ranges always comprise the extremes unless otherwise specified.

The Fischer-Tropsch reaction can be advantageously carried out as described in the American patent US 6,348,510 whose content is considered as being incorporated herein as reference.

The aqueous stream (ii) has a concentration of alcohols preferably higher than or equal to 20% by weight, more preferably ranging from 30% by weight to 60% by weight, with respect to the total weight of said aqueous stream (ii).

The aqueous stream (iii) comprises an amount of organic acids preferably higher than or equal to 50% by weight, more preferably ranging from 65% by weight to 90% by weight, with respect to the total weight of the organic acids present in said aqueous stream (ib).

For the purposes of the present description and of the following claims, the term "volatile compounds", optionally present in said aqueous stream (ii), refers to compounds such as, for example, hydrocarbons, aldehydes, ketones, or mixtures thereof.

Alternatively, said distillation column can be a stripping column.

Alternatively, said distillation column can be a distillation and a stripping column.

The distillation and/or stripping column is composed of a condenser at the head, a reboiler at the bottom, enrichment stages situated above the feeding and exhaustion stages situated below the feeding. Said enrichment and exhaustion stages can be obtained with plates for distillation and/or stripping columns, or with fillings of the structured or non-structured type.

For the purposes of the present invention, distillation and/or stripping columns having a configuration of the "asymmetric" type can be advantageously used, i.e. having a number of plates forming the theoretical enrichment stages equal to about half of the number of plates forming the theoretical exhaustion stages. Alternatively, distillation and/or stripping columns without plates forming the theoretical enrichment stages can be used.

For the purposes of the present invention and of the following claims, the term "aqueous stream" (ii) leaving the head of the column" refers to the stream leaving the condenser at the head forming part of said column. Said condenser is preferably a total condenser.

For the purposes of the present invention and of the following claims, the term "aqueous stream" (iii) leaving the bottom of the column" refers to the stream leaving the reboiler at the bottom forming part of said column.

The distillation and/or stripping column preferably operates at atmospheric pressure even if said column is capable of functioning equally well at pressures higher or lower than atmospheric pressure such as, for example, pressures ranging from 0.5 ata (atmosphere absolute) to 4 ata (atmosphere absolute).

The temperatures are generally determined by the pressure and the composition of the aqueous stream (i) coming from the Fischer-Tropsch reaction. In general, at operating pressures ranging from 0.5 ata (atmosphere absolute) to 4 ata (atmosphere absolute), the temperature at the head of the column is maintained within the range of 70°C to 125°C, that at the bottom within the range of 90°C to 160°C.

Incondensable compounds can optionally be present in said aqueous stream (i).

For the purposes of the present invention and of the following claims, the term "incondensable compounds" refers to traces of synthesis gas (e.g., hydrogen and/or carbon monoxide) optionally present in the aqueous stream (i) coming from the Fischer-Tropsch reaction.

In said distillation and/or stripping column, in addition to the formation of the above aqueous streams (ii) and (iii), the elimination of said incondensable compounds can also occurs. Said elimination is generally carried out by means of a gaseous blowdown in the condenser at the head forming part of said column.

As specified above, the saturator generally has the function of providing the vapour necessary for saturating the process gas, preferably natural gas, usually methane, before feeding this to the synthesis gas production plant. In the saturator, the water is generally put in contact with the above preheated process gas. For the purposes of the present invention, the saturator can operate either in countercurrent or in equicurrent, with or without external recirculation.

Any type of saturator known in the art can be advantageously used for the purposes of the present invention. Specific examples of saturators which can be advantageously used are: saturators of the vertical tube type, saturators of the spray tower type, saturators of the baffle tower type, saturators of the perforated plate tower type, saturators of the packed tower type, saturators of the wetted wall tower type, and the like.

Operating according to the process of the present invention, said gaseous stream (iv) leaves the head of the saturator, whereas a blowdown stream (v) comprising part of the organic acids present in said aqueous stream (ii) leaves the bottom of the saturator. Said blowdown stream (v) can optionally comprise other oxygenated compounds (e.g., alcohols, hydrocarbons, aldehydes, ketones) present in said aqueous stream (i).

The blowdown stream (v) has a concentration of organic acids preferably lower than or equal to 10% by weight, more preferably ranging from 2% by weight to 8% by weight, with respect to the total weight of said blowdown stream (v).

Said blowdown stream (v) can be discharged, or it can be fed to the distillation column.

Alternatively, said blowdown stream (v) can be sent to the burner of the steam reforming plant.

According to the process of the present invention, said blowdown stream (v) is preferably fed to the distillation column, after being combined with the aqueous stream (ib) coming from the Fischer-Tropsch reaction.

The saturator preferably operates at a temperature ranging from 160°C to 200°C and at a pressure ranging from 30 bara (absolute bar) to 60 bara (absolute bar).

Before being fed to the distillation and/or stripping column, the aqueous stream (i) coming from the Fischer-Tropsch reaction, can be advantageously subjected to filtration, for example with the use of coalescence filters, or of separators capable of separating the hydrophilic compounds from the lipophilic compounds, in order to maximize the elimination of undesired organic compounds, in particular hydrocarbons, present in said aqueous phase, which could cause the formation of foams in the equipments downstream.

The formation of foams can also be avoided by the addition of a suitable antifoaming agent selected, for example, from those commercially known (e.g. anionic surfactants, silicone surfactants, polyethylene glycols, or mixtures thereof).

The aqueous stream (iii) has a concentration of water preferably higher than or equal to 90% by weight, more preferably higher than or equal to 95% by weight, with respect to the total weight of said aqueous stream (iii).

Depending on the final use and consequently on the degree of purity to be obtained, said aqueous stream (iii) can be subjected to further purification treatments such as, for example: ion exchange resins, reverse osmosis, crystallization, electrodialysis, biological treatments.

In particular, said aqueous stream (iii), having a C.O.D. preferably ranging from 500 mg/l to 12,000 mg/l, can be advantageously subjected to biological treatments of both the aerobic and anaerobic type.

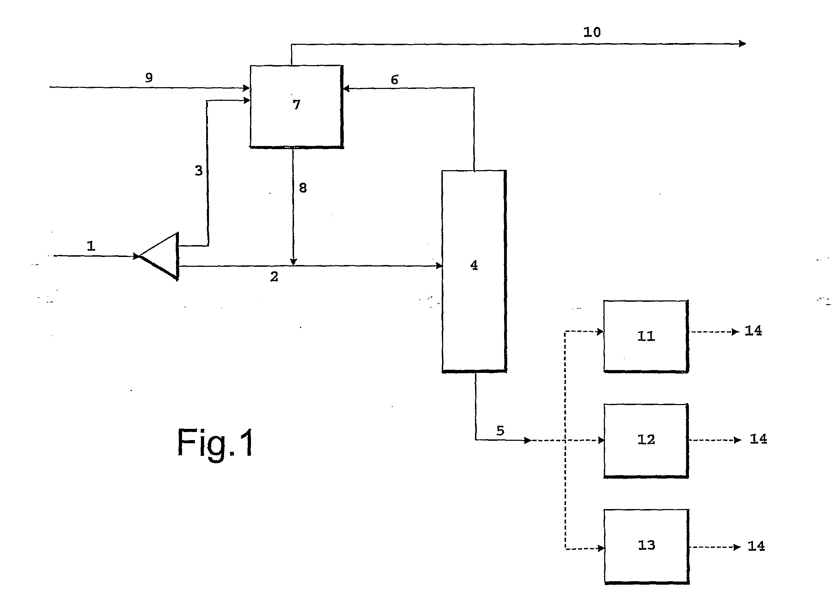

The present invention will now be illustrated in greater detail through an embodiment with reference to Figure 1 provided below.

The process of the present invention can be carried out as represented, for example, in Figure 1.

As represented in Figure 1, the aqueous stream (1) coming from the Fisher-Tropsch reaction, to which an antifoaming agent has been added, is fed:
- partially [e.g., an amount lower than or equal to 50% by weight with respect to the total weight of said aqueous stream (1)] [aqueous stream (3)] to the saturator (7);
- partially [e.g., an amount lower than or equal to 50% by weight with respect to the total weight of said aqueous stream (1)] [aqueous stream (2)] to the distillation column (4).

Said distillation column (4) is preferably composed of a number of plates forming the enrichment stages situated above the feeding higher than 2, typically ranging from 3 to 15, and a number of plates forming the exhaustion stages situated below the feeding higher than 5, typically ranging from 6 to 30, more specifically from 8 to 14. Said distillation column (4) is preferably composed of a number of plates forming the theoretical adjustment (or enrichment) stages equal to 6 and a number of plates forming the theoretical exhaustion stages equal to 12. The distillation column (4) also comprises a condenser at the head (not represented in Figure 1) and a reboiler at the bottom (not represented in Figure 1).

As mentioned above, the enrichment and exhaustion stages can be obtained with plates for distillation columns, or with fillings of the structured or non-structured type.

An aqueous stream (6) comprising alcohols and organic acids leaves the head of the distillation column (4), said organic acids being in an amount lower than or equal to 2% by weight, preferably ranging from 0.01% to 1.2% by weight, with respect to the total weight of said aqueous stream (6), and optional other volatile compounds.

The elimination of the incondensable compounds optionally present in said aqueous stream (1) can also be carried out in said distillation column (4) by means of a gaseous blowdown in the condenser at the head forming part of said distillation column (4) (not represented in Figure 1).

Said aqueous stream (6) is fed to the saturator (7) to which the process gas [gaseous stream (9)] (e.g., natural gas) is also fed.

The organic acids present in the aqueous stream (6) are essentially recycled to the process object of the present invention by means of the blowdown stream (8) leaving the bottom of the saturator (7).

A gaseous stream (10), which is fed to the synthesis gas production plant, in particular to the steam reforming section (not represented in Figure 1), therefore leaves the head of the saturator (7).

As represented in Figure 1, said blowdown stream (8) is joined with the aqueous stream (2) coming from the Fischer-Tropsch reaction and sent to the distillation column (4).

The aqueous stream (5), depending on the final use requested, can be fed:
- to an anaerobic biological treatment (11);
- to an aerobic biological treatment (12);
- to a reverse osmosis treatment (13);
in order to obtain purified water (14).

Some illustrative and non-limiting examples are provided hereunder for a better understanding of the present invention and for its embodiment.

### EXAMPLE 1

After carrying out the Fischer-Tropsch reaction as described in American patent US 6,348,510 (IFP-ENI) and with reference to Figure 1, the water which is separated by decanting from the reaction effluent [aqueous stream (1)], to which 2 ppm of antifoaming agent polypropyleneglycol having an average molecular weight of 2,000, was fed:
- partially, 36% by weight with respect to the total weight of said aqueous stream (1) [aqueous stream (3)], at a nominal flow-rate equal to 41 t/h to the saturator (7);
- partially, 64% by weight with respect to the total weight of said aqueous stream (1) [aqueous stream (2)], at a nominal flow-rate equal to 73 t/h to the distillation column (4).

The distillation column (4) has 6 enrichment stages and 12 exhaustion stages, a total condenser at the head and a reboiler at the bottom, and operates at a nominal flow-rate of 73 t/h.

The distillation column (4), operating at atmospheric pressure and at a temperature ranging from 90°C (temperature at the head) to 105°C (temperature at the bottom), was managed so as to have an aqueous stream leaving the head of the distillation column [aqueous stream (6)] equal to 2 t/h which, after suitable pumping, was sent to the saturator (7).

The aqueous stream (6) proved to have the following composition, obtained by gaschromatography:
- alcohols: 43% by weight with respect to the total weight of said aqueous stream (6);
- organic acids: 1% by weight with respect to the total weight of said aqueous stream (6).

The aqueous stream (5) leaving the reboiler at the bottom of the distillation column (5) comprising the organic acids present in the aqueous stream (2) proved to have the following composition, obtained by gaschromatography:
- organic acids: 76% by weight with respect to the total weight of the organic acids present in said aqueous stream (2).

Said aqueous stream (5), after suitable cooling, can be sent to the subsequent purification treatments.

The saturator (7) is a vertical tube saturator equipped with a vapour heating system and an external recirculation circuit equipped with a gas/liquid separator, operating at a pressure of 40 bar and 180°C, in equicurrent with the flow of natural gas to be saturated. Natural gas [gaseous stream (9)], was then sent, in countercurrent, to the saturator (7) at a nominal flow-rate equal to 150,000 Nm³/h.

A blowdown stream (8) was obtained at the outlet of the bottom of the saturator (7) at a nominal flow-rate equal to 1 t/h.

Said blowdown stream (8) proved to have the following composition, obtained by gaschromatography:
- organic acids: 7% by weight with respect to the total weight of said blowdown stream (8).

Said blowdown stream (8) was joined with said aqueous stream (2) and sent to the distillation column (4).

A saturated gaseous stream (10) having a nominal flow-rate equal to 200,000 Nm³/h was obtained at the outlet of the head of the saturator (7), which was sent to the synthesis gas production plant.

## Claims

1. A process for the purification of an aqueous stream (i) coming from the Fischer-Tropsch reaction which comprises:
- feeding said aqueous stream (i) in amount comprised between 25% by weight and 45% by weight with respect to the total weight of said aqueous stream (i), to a saturator [aqueous stream (ia)];
- feeding said aqueous stream (i) in amount comprised between 55% by weight and 75% by weight with respect to the total weight of said aqueous stream (i), to a distillation column [aqueous stream (ib)] obtaining two outgoing streams:
- an aqueous stream (ii) leaving the head of the column comprising alcohols having from 1 to 20 carbon atoms, organic acids having from 1 to 8 carbon atoms, said organic acids being present at a concentration lower than or equal to 2% by weight with respect to the total weight of said aqueous stream (ii), and other optional volatile compounds;
- an aqueous stream (iii) leaving the bottom of the distillation column comprising organic acids having from 1 to 8 carbon atoms, preferably from 2 to 4 carbon atoms;
- feeding said aqueous stream (ii) to said saturator;
- feeding the process gas to said saturator obtaining a gaseous stream (iv) leaving the head of the saturator;
- feeding said gaseous stream (iv) to the synthesis gas production plant.

2. The process according to claim 1, wherein said aqueous stream (ii) has a concentration of organic acids ranging from 0.01% by weight to 1.5% by weight with respect to the total weight of said aqueous stream (ii).

3. The process according to claims 1 or 2, wherein said aqueous stream (iv) is fed to catalytic steam reforming.

4. The process according to any of the previous claims, wherein said aqueous stream (ii) has a concentration of alcohols higher than or equal to 20% by weight with respect to the total weight of said aqueous stream (ii).

5. The process according to claim 4, wherein said aqueous stream (ii) has a concentration of alcohols ranging from 30% by weight to 60% by weight with respect to the total weight of said aqueous stream (ii).

6. The process according to any of the previous claims, wherein said aqueous stream (iii) comprises an amount of organic acids higher than or equal to 50% by weight with respect to the total weight of the organic acids present in said aqueous stream (ib).

7. The process according to claim 6, wherein said aqueous stream (iii) comprises an amount of organic acids ranging from 65% by weight to 90% by weight with respect to the total weight of the organic acids present in said aqueous stream (ib).

8. The process according to any of the previous claims, wherein a blowdown stream (v) leaves the bottom of said saturator.

9. The process according to claim 8, wherein said blowdown stream (v) has a concentration of organic acids lower than or equal to 10% by weight with respect to the total weight of said blowdown stream (v).

10. The process according to claim 9, wherein said blowdown stream (v) has a concentration of organic acids ranging from 2% by weight to 8% by weight with respect to the total weight of said blowdown stream (v).

11. The process according to any of the claims from 8 to 10, wherein said blowdown stream (v) is fed to the distillation column, after being joined with the aqueous stream (ib) coming from the Fischer-Tropsch reaction.

12. The process according to any of the previous claims, wherein said saturator operates at a temperature ranging from 160°C to 200°C and at a pressure ranging from 30 bara (bar absolute) to 60 bara (bar absolute).

## Patentansprüche

1. Verfahren für die Reinigung eines wässrigen Stroms (i), der von der Fischer-Tropsch-Reaktion kommt, welches umfasst:
- Zuführen des wässrigen Stroms (i) in einer Menge, umfasst zwischen 25 Gew.-% und 45 Gew.-% in Bezug auf das Gesamtgewicht des wässrigen Stroms (i) zu einem Sättiger [wässriger Strom (ia)];
- Hinzuführen des wässrigen Stroms (i) in einer Menge, umfasst zwischen 55 Gew.-% und 75 Gew.-% in Bezug auf das Gesamtgewicht des wässrigen Stroms (i) zu einer Destillationssäule [wässriger Strom (ib)], erhaltend zwei austretende Ströme:
- einen wässrigen Strom (ii), der den Kopf der Säule verlässt, umfassend Alkohole mit von 1 bis 20 Kohlenstoffatome, organische Säuren mit von 1 bis 8 Kohlenstoffatome, wobei die organischen Säuren in einer Konzentration vorhanden sind, die niedriger als oder gleich zu 2 Gew.-% in Bezug auf das Gesamtgewicht dieses wässrigen Stroms (ii) vorhanden sind, und andere optionale flüchtige Verbindungen;
- einen wässrigen Strom (iii), der den Fuß der Destillationssäule verlässt, umfassend organische Säuren mit von 1 bis 8 Kohlenstoffatome, vorzugsweise von 2 bis 4 Kohlenstoffatome;
- Hinzuführen dieses wässrigen Stroms (ii) zu dem Sättiger;
- Hinzuführen des Verfahrensgases zu dem Sättiger, enthaltend einen gasförmigen Strom (iv), der den Kopf des Sättigers verlässt;
- Hinzuführen dieses gasförmigen Stroms (iv) zu der Synthesegas-Herstellungsanlage.

2. Verfahren nach Anspruch 1,
wobei dieser wässrige Strom (ii) eine Konzentration von organischen Säuren im Bereich von 0,01 Gew.-% bis 1,5 Gew.-% in Bezug auf das Gesamtgewicht dieses wässrigen Stroms (ii) aufweist.

3. Verfahren nach Ansprüchen 1 oder 2,
wobei dieser wässrige Strom (iv) zu katalytischer Dampfrefomierung zugeführt wird.

4. Verfahren nach einem beliebigen der vorhergehenden Ansprüche,
wobei dieser wässrige Strom (ii) eine Konzentration von Alkoholen höher als oder gleich zu 20 Gew.-% in Bezug auf das Gesamtgewicht dieses wässrigen Stroms (ii) aufweist.

5. Verfahren nach Anspruch 4,
wobei dieser wässrige Strom (ii) eine Konzentration von Alkoholen im Bereich von 30 Gew.-% bis 60 Gew.-% in Bezug auf das Gesamtgewicht dieses wässrigen Stroms (ii) aufweist.

6. Verfahren nach einem beliebigen der vorhergehenden Ansprüche,
wobei dieser wässrige Strom (iii) eine Menge an organischen Säuren umfasst, höher als oder gleich zu 50 Gew.-% in Bezug auf das Gesamtgewicht der organischen Säuren, die in diesem wässrigen Strom (ib) vorhanden sind.

7. Verfahren nach Anspruch 6,
wobei dieser wässrige Strom (iii) eine Menge an organischen Säuren im Bereich von 65 Gew.-% bis 90 Gew.-% in Bezug auf das Gesamtgewicht der organischen Säuren, die in diesem wässrigen Strom (ib) vorhanden sind, umfasst.

8. Verfahren nach einem beliebigen der vorhergehenden Ansprüche,
wobei Abblasstrom (v) den Fuß des Sättigers verlässt.

9. Verfahren nach Anspruch 8,
wobei der Abblasstrom (v) eine Konzentration an organischen Säuren geringer als oder gleich zu 10 Gew.-% in Bezug auf das Gesamtgewicht dieses Abblasstroms (v) aufweist.

10. Verfahren nach Anspruch 9,
wobei dieser Abblasstrom (v) eine Konzentration an organischen Säuren im Bereich von 2 Gew.-% bis 8 Gew.-% in Bezug auf das Gesamtgewicht dieses Abblasstroms (v) aufweist.

11. Verfahren nach einem beliebigen der Ansprüche von 8 bis 10,
wobei der Abblasstrom (v) der Destillationssäule zugeführt wird, nachdem er mit dem wässrigen Strom (ib), der aus der Fischer-Tropsch-Reaktion kommt, vereinigt wird.

12. Verfahren nach einem beliebigen der vorhergehenden Ansprüche,
wobei der Sättiger bei einer Temperatur im Bereich von 160 °C bis 200 °C und bei einem Druck im Bereich von 30 bara (bar absolut) bis 60 bara (bar absolut) operiert.

## Revendications

1. Procédé de purification d'un courant aqueux (i) issu de la réaction de Fisher-Tropsch, lequel procédé comporte les opérations suivantes :
- envoyer dudit courant aqueux (i), en une quantité de 25 % à 45 %, en poids rapporté au poids total dudit courant aqueux (i), soit le courant aqueux (ia), dans un saturateur,
- et envoyer dudit courant aqueux (i), en une quantité de 55 % à 75 %, en poids rapporté au poids total dudit courant aqueux (i), soit le courant aqueux (ib), dans une colonne de distillation, de laquelle sortent deux courants :
- un courant aqueux (ii) sortant en tête de colonne, comprenant des alcools comportant de 1 à 20 atomes de carbone, des acides organiques comportant de 1 à 8 atomes de carbone, lesquels acides organiques se trouvent présents en une concentration inférieure ou égale à 2 %, en poids rapporté au poids total dudit courant aqueux (ii), et le cas échéant, d'autres composés volatils,
- et un courant aqueux (iii) sortant par le fond de la colonne de distillation, comprenant des acides organiques comportant de 1 à 8 atomes de carbone, et de préférence, de 2 à 4 atomes de carbone ;
- envoyer ledit courant aqueux (ii) dans ledit saturateur ;
- envoyer du gaz de procédé dans ledit saturateur, ce qui donne un courant gazeux (iv) qui sort du saturateur en haut de celui-ci ;
- et envoyer ledit courant gazeux (iv) dans l'installation de production de gaz de synthèse.

2. Procédé conforme à la revendication 1, dans lequel, dans ledit courant aqueux (ii), la concentration des acides organiques vaut de 0,01 % à 1,5 %, en poids rapporté au poids total dudit courant aqueux (ii).

3. Procédé conforme à la revendication 1 ou 2, dans lequel ledit courant aqueux (iv) est envoyé dans une unité de reformage catalytique à la vapeur.

4. Procédé conforme à l'une des revendications précédentes, dans lequel, dans ledit courant aqueux (ii), la concentration des alcools est supérieure ou égale à 20 %, en poids rapporté au poids total dudit courant aqueux (ii).

5. Procédé conforme à la revendication 4, dans lequel, dans ledit courant aqueux (ii), la concentration des alcools vaut de 30% à 60 %, en poids rapporté au poids total dudit courant aqueux (ii).

6. Procédé conforme à l'une des revendications précédentes, dans lequel ledit courant aqueux (iii) contient des acides organiques en une quantité de 50 % ou plus, en poids rapporté au poids total des acides organiques présents dans ledit courant aqueux (ib).

7. Procédé conforme à la revendication 6, dans lequel ledit courant aqueux (iii) contient des acides organiques en une quantité de 65 % à 90 %, en poids rapporté au poids total des acides organiques présents dans ledit courant aqueux (ib).

8. Procédé conforme à l'une des revendications précédentes, dans lequel un courant de vidange (v) sort du saturateur en bas de celui-ci.

9. Procédé conforme à la revendication 8, dans lequel, dans ledit courant de vidange (v), la concentration des acides organiques est inférieure ou égale à 10 %, en poids rapporté au poids total dudit courant de vidange (v).

10. Procédé conforme à la revendication 9, dans lequel, dans ledit courant de vidange (v), la concentration des acides organiques vaut de 2 % à 8 %, en poids rapporté au poids total dudit courant de vidange (v).

11. Procédé conforme à l'une des revendications 8 à 10, dans lequel ledit courant de vidange (v) est envoyé dans la colonne de distillation, après avoir été réuni au courant aqueux (ib) issu de la réaction de Fisher-Tropsch.

12. Procédé conforme à l'une des revendications précédentes, dans lequel on fait fonctionner ledit saturateur à une température de 160 à 200 °C et sous une pression absolue de 30 à 60 bars.
